Europäisches Patentamt

(19) European Patent Office

Office européen des brevets

(11) Numéro de publication: **0 123 198**
**B1**

(12) **FASCICULE DE BREVET EUROPEEN**

(45) Date de publication du fascicule du brevet: **02.09.87**

(21) Numéro de dépôt: **84103971.2**

(22) Date de dépôt: **10.04.84**

(51) Int. Cl.⁴: **H 01 S 3/23, H 01 S 3/13**

(54) **Dispositif laser à gaz capable d'émettre des impulsions d'un rayonnement ayant une fréquence unique.**

(30) Priorité: **13.04.83 FR 8305996**

(43) Date de publication de la demande:
**31.10.84 Bulletin 84/44**

(45) Mention de la délivrance du brevet:
**02.09.87 Bulletin 87/36**

(84) Etats contractants désignés:
**BE CH DE FR GB IT LI NL SE**

(56) Documents cités:
**FR-A-2 083 442**
**FR-A-2 481 848**

**APPLIED PHYSICS, vol. 23, no. 3, novembre 1980, pages 245-251, Springer-Verlag, Heidelberg, DE; P.E. DYER et al.: "Pulse evolution in injection mode locked TECO2 lasers"**

(73) Titulaire: **COMPAGNIE GENERALE D'ELECTRICITE Société anonyme dite: 54, rue La Boétie F-75382 Paris Cedex 08 (FR)**

(72) Inventeur: **Le Goff, Denis 21, Clos de la Fontaine F-78210 St-Cyr l'Ecole (FR)**
Inventeur: **Gagnol, Claude 8bis, rue A. Nicolas F-91300 Massy (FR)**

(74) Mandataire: **Weinmiller, Jürgen et al Lennéstrasse 9 Postfach 24 D-8133 Feldafing (DE)**

## Description

La présente invention concerne un dispositif laser à gaz capable d'émettre des impulsions d'un rayonnement ayant une fréquence unique.

Ce dispositif laser est d'un type connu, comportant

— un générateur laser à gaz comprenant

· deux réflecteurs disposés pour former une cavité optique résonnante suivant un premier axe, un de ces réflecteurs étant partiellement transparent,

· des moyens pour disposer un gaz laser actif dans la cavité,

· des moyens de déclenchement d'une décharge électrique dans le gaz, ces moyens étant capables de créer un rayonnement à fréquences multiples oscillant dans la cavité, celle-ci comportant des moyens pour polariser ce rayonnement linéairement dans un premier plan

· et des moyens pour déplacer un des deux réflecteurs le long du premier axe de manière à modifier, par variation de la longueur de la cavité, les fréquences du rayonnement oscillant, dans des gammes prédéterminées,

— un émetteur laser apte à délivrer un rayonnement continu à fréquence stabilisée, cette fréquence étant comprise dans lesdites gammes prédéterminées,

— un polariseur disposé à la sortie de l'émetteur pour polariser linéairement le rayonnement continu suivant un deuxième plan,

— des moyens d'injection dans la cavité du rayonnement continu polarisé, ces moyens recevant ce rayonnement suivant un deuxième axe et renvoyant le rayonnement parallèlement au premier axe vers le réflecteur partiellement transparent, de manière que le deuxième plan soit perpendiculaire au premier plan, une partie de ce rayonnement polarisé sortant de la cavité,

— un récepteur photoélectrique disposé pour recevoir au moins une partie dudit rayonnement continu polarisé sortant de la cavité

— et un circuit de détection connecté à la sortie électrique du récepteur et auxdits moyens de déclenchement, ce circuit étant capable de délivrer un signal à l'entrée des moyens de déclenchement lorsque l'énergie laser reçue par le récepteur passe par une valeur extrême, une des fréquences de rayonnement capable d'osciller dans la cavité étant alors égale à la fréquence stabilisée du rayonnement continu injecté, ce signal commandant le déclenchement de la décharge électrique, une partie de l'énergie du rayonnement oscillant dans la cavité traversant le réflecteur partiellement transparent pour créer une impulsion de rayonnement laser dont la fréquence unique est égale à celle du rayonnement continu délivré par l'émetteur.

Un tel dispositif laser présente un inconvénient. En effet, le récepteur photoélectrique reçoit non seulement le rayonnement continu injecté dans la cavité laser, mais aussi une partie du rayonnement par impulsions, de puissance beaucoup plus forte, émis par le générateur laser. Comme ce récepteur est nécessairement très sensible, il peut être détérioré par le rayonnement par impulsions qu'il reçoit.

La présente invention a pour but de pallier cet inconvénient.

Elle a pour objet un dispositif laser à gaz capable d'émettre des impulsions d'un rayonnement ayant une fréquence unique, du type spécifié ci-dessus, caractérisé en ce que

— ladite partie du rayonnement continu polarisé reçue par le récepteur sort de la cavité suivant la deuxième axe après renvoi en sens inverse par le réflecteur partiellement transparent

— et qu'il comporte une lame optique disposée entre l'émetteur et le polariseur et orientée de façon à diriger vers le récepteur le rayonnement sorti de la cavité suivant le deuxième axe et ayant traversé le polariseur en sens inverse du rayonnement émis par l'émetteur, ladite valeur extrême de l'énergie laser reçue par le récepteur, pour laquelle le circuit de détection délivre ledit signal, étant une valeur minimale.

Un dispositif connu et une forme particulière de l'objet de la présente invention sont décrits ci-dessous, à titre d'exemple, en référence aux dessins annexés, dans lesquels

— la figure 1 représente schématiquement un dispositif connu

— et la figure 2 représente schématiquement un mode de réalisation du dispositif laser selon l'invention.

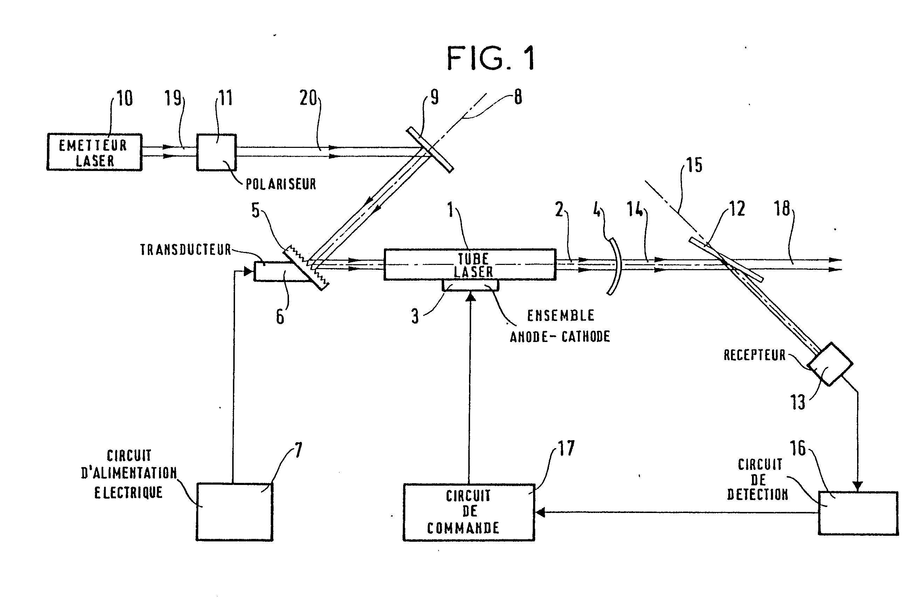

Sur la figure 1, est visible un tube à décharge laser 1 d'axe 2, contenant un gaz actif tel que du gaz carbonique. Au tube 1 est associé un ensemble anode-cathode représenté schématiquement par 3. Le tube 1 est disposé à l'intérieur d'une cavité optique résonnante, d'axe 2, formée par un miroir sphérique partiellement transparent 4 et un réseau de diffraction 5 incliné sur l'axe 2. Le réseau 5, du type fonctionnant en réflexion, est fixé sur un cristal piézoélectrique faisant partie d'un transducteur électromécanique 6 connecté électriquement à un circuit d'alimentation électrique 7. Suivant un axe 8 coupant l'axe 2 sur la surface réfléchissante du réseau 5, est disposé un miroir de renvoi 9 recevant, après traversée d'un polariseur 11, le rayonnement continu émis par un émetteur laser 10.

Une lame optique 12 inclinée à l'incidence de Brewster est placée sur l'axe 2, en dehors de la cavité 4—5, du côté du miroir 4. Un récepteur électro-optique 13 est disposé de façon à recevoir le rayonnement 14 sortant de la cavité et renvoyé par la lame 12 suivant un axe 15 différent de l'axe 2. La sortie électrique du récepteur 13 est reliée à l'entrée d'un circuit de détection 16. L'ensemble anode-cathode 3 est reliée au circuit 16 à travers un circuit de commande 17.

Le dispositif connu illustré par la figure 1 fonctionne de la manière suivante.

Le circuit de commande 17 délivre une suite d'impulsions haute tension, chacune de ces impulsions étant émise lorsque ce circuit reçoit un signal électrique provenant du circuit 16. Ces impulsions haute tension sont appliquées à l'ensemble anode-cathode 3, de manière à créer des décharges électriques dans le gaz actif contenu dans le tube 1. Ces décharges électriques créent un rayonnement laser impulsionnel, polarisé linéairement dans le plan de la figure, perpendiculairement à la direction des lignes parallèles du réseau 5. Ce rayonnement impulsionnel oscille dans la cavité 4—5, et une partie de son énergie passe à travers le miroir partiellement transparent 4 pour former un faisceau laser impulsionnel. En principe la totalité de l'énergie de ce faisceau traverse la lame 12 à l'incidence de Brewster, pour former un faisceau 18.

Le circuit 7 délivre à sa sortie une suite de rampes de tensions électriques. Les tensions correspondantes sont appliquées aux électrodes du transducteur piézoélectrique 6 de façon à déplacer le réseau 5 parallèlement à lui même le long de l'axe 2, et à provoquer une variation de la longueur de la cavité 4—5 et ainsi une variation de la fréquence de rayonnement capable d'osciller dans cette cavité. Ce rayonnement comporte plusieurs modes longitudinaux. Les fréquences de ces divers modes varient donc respectivement dans des gammes de fréquences qui dépendent de l'amplitude du déplacement du réseau 5.

L'émetteur laser continu 10 comporte des moyens de stabilisation bien connus qui lui permettent de délivrer un faisceau continu 19 à une seule fréquence stable dans le temps. Cette fréquences est choisie dans une des gammes de fréquence d'oscillation des divers modes du rayonnement impulsionnel.

Le faisceau continu 19 traverse le polariseur 11 pour former un faisceau 20 polarisé linéairement perpendiculairement au plan de la figure. Après réflexion sur le miroir 9, ce faisceau est dirigé vers le réseau 5 suivant l'axe 8. Cet axe correspond à l'ordre zéro du réseau. Le faisceau continu polarisé linéairement est donc, après réflexion sur le réseau 5, injecté dans la cavité 4—5 parallèlement à l'axe 2 vers le miroir 4. Une partie de l'énergie du faisceau continu injecté traverse le miroir 4.

Le rayonnement laser qui se propage du miroir 4 à la lame 12 résulte ainsi de la superposition des deux rayonnements:

— un rayonnement laser impulsionnel polarisé linéairement dans le plan de la figure

— et un rayonnement laser continu polarisé linéairement dans un plan perpendiculaire au plan de la figure.

Il à été vu plus haut que le rayonnement laser impulsionnel traverse en principe intégralement la lame 12 pour former le faisceau 18. Une partie importante de l'énergie du rayonnement laser continu est réfléchie vers le récepteur 13 par la lame 12 à l'incidence de Brewster. L'autre partie de ce rayonnement continu traverse la lame 12 pour venir se superposer au faisceau 18.

Comme le rayonnement continu traversant la cavité se propage dans le sens d'émission du rayonnement impulsionnel, on sait que l'amplitude du rayonnement continu passe par un maximum lorsqu'une des fréquences des divers modes de la cavité est égale à la fréquence fixe du rayonnement continu. L'injection du rayonnement continu dans la cavité provoque alors un "accrochage" de l'oscillation laser sur la fréquence fixe du rayonnement injecté, de sorte que les autres modes longitudinaux du rayonnement impulsionnel disparaissent.

L'énergie du rayonnement reçu par le récepteur 13 passe donc par un maximum. A cet instant, le circuit de détection 16, qui peut comporter par exemple un circuit de dérivation, délivre un signal électrique à front vertical, ce signal étant transmis au circuit 17 afin de déclencher l'impulsion laser au moment où la fréquence d'accord de la cavité est égale à celle du rayonnement continu injecté.

Le rayonnement impulsionnel 18 émis par le dispositif comporte donc une seule fréquence fixe. Comme il a été vu plus haut, à ce rayonnement est superposé une petite partie de l'énergie du rayonnement continu, de puissance très faible par rapport à celle du rayonnement impulsionnel.

En principe, comme il a été vu plus haut, le récepteur 13 ne devrait recevoir que le rayonnement continu. Mais en pratique, le rayonnement impulsionnel délivré par la cavité laser 4—5 comporte toujours, dans une faible proportion de l'ordre de un pour cent, une composante polarisée linéairement, perpendiculairement au plan de la figure. Etant donné que le rayonnement impulsionnel est de forte puissance, cette composante, après réflexion sur la lame 12, est cependant suffisamment puissante pour endommager dans certains cas le récepteur 13. En effet, notamment dans le cas où le dispositif émet à la longueur d'onde de 10,6 microns, ce récepteur 13 est d'un type refroidi, très sensible aux surcharges.

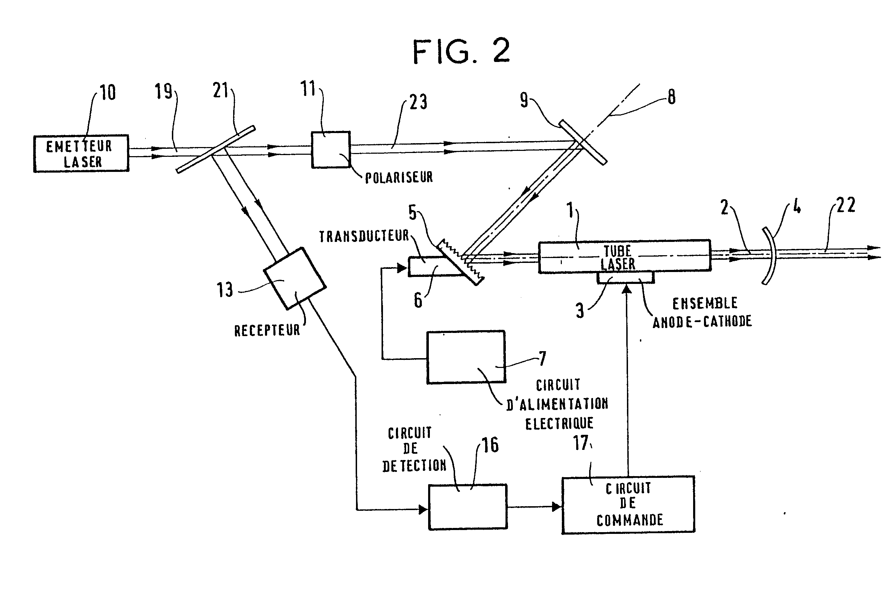

Le dispositif représenté sur la figure 2 comporte des éléments identiques ou analogues à ceux du dispositif illustré par la figure 1, ces éléments étant désignés par les mêmes références.

C'est ainsi que, sur la figure 2, une cavité optique résonnante d'axe 2 est formée par un miroir sphérique partiellement transparent 4 et un réseau 5 incliné sur l'axe. A l'intérieur de la cavité, est disposé un tube à décharge laser 1 muni d'un ensemble anode-cathode 3. Suivant un axe 8 qui correspond à l'ordre zéro du réseau 5, est injecté le rayonnement laser continu provenant d'un émetteur laser 10 à fréquence stabilisée, après traversée d'un polariseur 11 et réflexion sur un miroir de renvoi 9 disposé sur l'axe 8. Le réseau 5 est fixé sur le cristal piézoélectrique d'un transducteur électromécanique 6 relié à un circuit d'alimentation 7. Entre l'émetteur laser 10 et le polariseur 11, est disposé une lame optique de prélèvement partiellement réfléchissante 21 capable de renvoyer sur un récepteur photoélectrique 13 une partie de l'énergie qu'elle reçoit en provenance du polariseur 11. La sortie électrique du récepteur 13 est reliée à un circuit de détection 16. L'ensemble anode-cathode 3 est relié au circuit de détection 16 à travers un circuit de commande 17.

Le dispositif décrit ci-dessus et représenté sur la figure 2 fonctionne de la manière suivante.

Le circuit de commande 17 délivre une suite d'impulsions haute tension, chacune de ces impulsions étant émise lorsque le circuit 17 reçoit un signal électrique provenant du circuit 16. Ces impulsions haute tension sont appliquées aux électrodes 3 de manière à créer des décharges électriques dans le gaz laser actif contenu dans le tube 1. Ces décharges créent un rayonnement impulsionnel polarisé linéairement, perpendiculairement à la direction des lignes parallèles du réseau 5, c'est-à-dire dans le plan de la figure. Ce rayonnement oscille dans la cavité 4—5 et une partie de son énergie traverse le miroir partiellement transparent 4 pour former un faisceau laser impulsionnel 22.

Le circuit 7 délivre une suite de rampes de tensions électriques. Ces tensions sont appliquées aux électrodes du transducteur 6 de façon à déplacer le réseau 5 parallèlement à lui-même le long de l'axe 2. Ce déplacement entraîne une variation de la longueur de la cavité 4—5, cette variation provoquant une variation de la fréquence du rayonnement laser capable d'osciller dans la cavité. Ce rayonnement comporte plusieurs modes longitudinaux. Les fréquences de ces divers modes varient donc respectivement dans des gammes de fréquence prédéterminées.

La fréquence stabilisée du faisceau laser continu 19 délivré par l'émetteur 10 est contenue dans une de ces gammes de fréquences. Ce faisceau 19 traverse la lame 21, puis le polariseur 11, pour former un rayonnement laser 23 polarisé linéairement perpendiculairement au plan de la figure. Après réflexion sur le miroir 9, ce faisceau est dirigé vers le réseau 5 suivant l'axe 8. Après éflexion sur le réseau, ce faisceau est injecté dans la cavité 4—5 parallèlement à l'axe 2, vers le miroir 4. La plus grande partie de l'énergie du faisceau continu injecté est renvoyée en sens inverse par le miroir 4 vers le réseau 5. Une petite partie de l'énergie ainsi renvoyée sort de la cavité suivant l'axe 8, puis est réfléchie par le miroir 9 vers le polariseur 11. Cette énergie laser continue traverse librement le polariseur 11 puisqu'elle est toujours polarisée linéairement, perpendiculairement au plan de la figure, puis est partiellement réfléchie par la lame 21 vers le récepteur 13.

Il y a lieu de remarquer que l'énergie laser impulsionnelle qui oscille dans la cavité et qui est polarisée dans le plan de la figure peut aussi, dans une faible proportion, sortir de la cavité suivant l'axe 8, mais elle est bloquée par le polariseur 11 et ne peut donc détériorer le récepteur 13. Si ce rayonnement impulsionnel comporte, comme dans le cas du dispositif illustré par la figure 1, une faible composante polarisée perpendiculairement au plan de la figure, cette composante peut sortir aussi de la cavité suivant l'axe 8, mais elle est fortement atténuée par réflexion sur le réseau 5. L'énergie résiduelle correspondante, qui vient impressioner le récepteur 13 après traversée du polariseur 11 et réflexion par la lame 21, est trop faible pour provoquer une détérioration du récepteur 13.

Etant donné que le rayonnement laser continu injecté dans la cavité et capté par le récepteur 13 est réfléchi par le miroir 4 en sens inverse de la direction d'émission du rayonnement impulsionnel, l'énergie laser reçue par le récepteur 13 passe par un minimum lorsque, par suite de la variation de fréquence provoquée par le transducteur 6, la fréquence du rayonnement impulsionnel est égale à la fréquence stabilisée du rayonnement continu injecté dans la cavité 4—5.

A l'instant où ce minimum est atteint, le circuit de détection 16 délivre un signal vers le circuit 17 qui provoque une décharge électrique dans le gaz contenu dans le tube 1.

A cet instant, l'injection du rayonnement continu dans la cavité provoque un "accrochage" de l'oscillation laser sur la fréquence fixe du rayonnement injecté, de sorte que les autres modes longitudinaux du rayonnement impulsionnel disparaissent.

Le rayonnement impulsionnel 22 comporte donc une fréquence unique, le récepteur 13 étant préservé contre toute surcharge susceptible de le détériorer.

L'injection de l'énergie laser continue, à fréquence stabilisée, dans la cavité du laser impulsionnel peut être réalisée par d'autres moyens qu'un réseau. Elle peut être notamment réalisée soit à l'aide d'une lame de BREWSTER dans la cavité ou à l'extérieur de la cavité, soit à travers un orifice ménagé dans un miroir où à travers un miroir partiellement transparent limitant la cavité.

Le dispositif laser selon la présente invention peut être appliqué à la télémétrie hétérodyne.

**Revendications**

1. Dispositif laser à gaz capable d'émettre des impulsions d'un rayonnement (22) ayant une fréquence unique, comportant

— un générateur laser à gaz (1—5) comprenant

· deux réflecteurs (4, 5) disposés pour former une cavité optique résonnante suivant un premier axe (2), un de ces réflecteurs (4) étant partiellement transparent,

· des moyens (1) pour disposer un gaz laser actif dans la cavité,

· des moyens de déclenchement (17, 3) d'une décharge électrique dans le gaz, ces moyens étant capables de créer un rayonnement à fréquences multiples oscillant dans la cavité, celle-ci comportant des moyens (5) pour polariser ce rayonnement linéairement dans un premier plan

· et des moyens (6) pour déplacer un des deux réflecteurs le long du premier axe de manière à modifier par variation de la longueur de la cavité, les fréquences du rayonnement oscillant, dans des gammes prédéterminées,

— un émetteur laser (10) apte à délivrer un rayonnement continu à fréquence stabilisée, cette fréquence étant comprise dans lesdites gammes prédéterminées,

— un polariseur (11) disposé à la sortie de l'émetteur laser pour polariser linéairement le rayonnement continu suivant un deuxième plan,

— des moyens d'injection (9, 5) dans la cavité du rayonnement continu polarisé, ces moyens recevant ce rayonnement suivant un deuxième axe (8) et renvoyant le rayonnement parallèlement au premier axe vers le réflecteur partiellement transparent, de manière que le deuxième plan soit perpendiculaire au premier plan, une partie de ce rayonnement polarisé sortant de la cavité,

— un récepteur photoélectrique (13) disposé pour recevoir au moins une partie dudit rayonnement continu polarisé sortant de la cavité

— et un circuit de détection (16) connecté à la sortie électrique du récepteur et auxdits moyens de déclenchement, ce circuit étant capable de délivrer un signal à l'entrée des moyens de déclenchement lorsque l'énergie laser reçue par le récepteur passe par une valeur extrême, une des fréquences de rayonnement capable d'osciller dans la cavité étant alors égale à la fréquence stabilisée du rayonnement continu polarisé injecté, ce signal commandant le déclenchement de la décharge électrique, une partie de l'énergie du rayonnement oscillant dans la cavité traversant le réflecteur partiellement transparent pour créer une impulsion de rayonnement laser dont la fréquence unique est égale à celle du rayonnement continu délivré par l'émetteur,

caractérisé en ce que

— ladite partie du rayonnement continu polarisé reçue par le récepteur (13) sort de la cavité (4—5) suivant le deuxième axe (8) après renvoi en sens inverse par le réflecteur partiellement transparent (4)

— et qu'il comporte une lame optique (21) disposée entre l'émetteur (10) et le polariseur (11) et orientée de façon à diriger vers le récepteur (13) le rayonnement sorti de la cavité (4—5) suivant le deuxième axe (8) et ayant traversé le polariseur (11) en sens inverse du rayonnement (19) émis par l'émetteur (10), ladite valeur extrême de l'énergie laser reçue par le récepteur (13), pour laquelle le circuit de détection (16) délivre ledit signal, étant une valeur minimale.

2. Dispositif selon la revendication 1, caractérisé en ce que l'autre réflecteur de la cavité est constitué par un réseau (5) incliné sur le premier axe (2), lesdits moyens pour polariser linéairement dans un premier plan le rayonnement oscillant dans la cavité étant constitués par les lignes parallèles du réseau (5), lesdits moyens d'injection comportant le réseau (5), le deuxième axe (8) étant l'axe d'ordre zéro du réseau (5).

3. Dispositif selon la revendication 2, caractérisé en ce que lesdits moyens pour déplacer un des deux réflecteurs le long du premier axe sont constitués par un transducteur électro-mécanique (6) comportant un cristal piézoélectrique fixé sur le corps du réseau (5).

## Patentansprüche

1. Gaslaservorrichtung, die Impulse einer Strahlung (22) mit einer einzigen Frequenz aussenden kann, mit

— einem Gaslasergenerator (1—5), der aufweist:

· zwei Reflektoren (4, 5), die so angeordnet sind, daß sie entlang einer ersten Achse (2) einen optischen Resonanzhohlraum bilden, wobei einer dieser Reflektoren (4) teilweise transparent ist,

· Mittel (1), um ein aktives Lasergas in den Hohlraum zu bringen,

· Mittel (17, 3) zum Auslösen einer elektrischen Entladung im Gas, wobei diese Mittel eine Strahlung mit vielen Frequenzen erzeugen kann, die im Hohlraum oszilliert, wobei dieser Hohlraum Mittel (5) aufweist, um diese Strahlung linear in einer ersten Ebene zu polarisieren,

· und Mittel (6), um einen der beiden Reflektoren entlang der ersten Achse zu verschieben, um durch Veränderung der Länge des Hohlraums die Frequenzen der oszillierenden Strahlung in vorbestimmten Bereichen zu verändern,

— einem Laseremitter (10), der eine kontinuierliche Strahlung stabilisierter Frequenz liefern kann, wobei diese Frequenz innerhalb der vorbestimmten Bereiche liegt,

— einem Polarisierer (11), der am Ausgang des Laseremitters angeordnet ist, um die kontinuierliche Strahlung entlang einer zweiten Ebene linear zu polarisieren,

— Mitteln (9, 5) zur Injektion der kontinuierlichen polarisierten Strahlung in den Hohlraum, wobei diese Mittel diese Strahlung entlang einer zweiten Achse (8) empfangen und sie parallel zur ersten Achse zum teilweise transparenten Reflektor schicken, so daß die zweite Ebene senkrecht zur ersten Ebene liegt, wobei ein Teil dieser polarisierten Strahlung aus dem Hohlraum austritt,

— einem lichtelektrischen Empfänger (13), der so angeordnet ist, daß er zumindest einen Teil der aus dem Hohlraum austretenden kontinuierlichen polarisierten Strahlung empfängt,

— und mit einem Detektionskreis (16) der mit dem elektrischen Ausgang des Empfängers und den Auslösemitteln verbunden ist, wobei dieser Kreis ein Signal an den Eingang der Auslösemittel liefern kann, wenn die vom Empfänger empfangene Laserenergie einen Extremwert durchschreitet, wobei eine der Strahlungsfrequenzen, die im Hohlraum oszillieren kann, dann gleich der stabilisierten Frequenz der injizierten kontinuierlichen polarisierten Strahlung ist, wobei das Signal das Auslösen der elektrischen Entladung steuert und ein Teil der Energie der im Hohlraum oszillierenden Strahlung den teilweise transparenten Reflektor durchquert, um einen Laserstrahlungsimpuls zu erzeugen, dessen einzige Frequenz gleich der der vom Emitter gelieferten kontinuierlichen Strahlung ist,

dadurch gekennzeichnet,

— daß der vom Empfänger (13) empfangene Teil der kontinuierlichen polarisierten Strahlung aus dem Hohlraum (4—5) entlang der zweiten Achse (8) austritt, nachdem er in entgegengesetzter Richtung vom teilweise transparenten Reflektor (4) zurückgeschickt wurde,

— une daß die Vorrichtung ein optisches Plättchen (21) aufweist, das zwischen dem Emitter (10) und dem Polarisierer (11) angeordnet und so ausgerichtet ist, daß es zum Empfänger (13) die Strahlung schickt, die aus dem Hohlraum (4—5) entlang der zweiten Achse (8) ausgetreten ist und den Polarisierer (11) in Gegenrichtung zur vom Emitter (10) ausgesandten Strahlung (19) durchquert hat, wobei der Extremwert der vom Empfänger (13) erhaltenen Laserenergie, für den der Detektionskreis (16) das Signal liefert, ein Minimalwert ist.

2. Vorrichtung nach Anspruch 1, dadurch gekennzeichnet, daß der andere Reflektor des Hohlraums aus einem Netz (5) besteht, das zur ersten Achse (2) geneigt ist, wobei die Mittel zur linearen Polarisation der im Hohlraum oszillierenden Strahlung in einer ersten Ebene aus den parallelen Zeilen des Netzes (5) bestehen, wobei die Injektionsmittel das Netz (5) enthalten und die zweite Achse (9) die Nullachse des Netzes (5) ist.

3. Vorrichtung nach Anspruch 2, dadurch gekennzeichnet, daß die Mittel zum Verschieben eines der beiden Reflektoren entlang der ersten Achse aus einem elektromechanischen Transduktor (6) bestehen, der einen auf dem Träger des Netzes (5) befestigten piezoelektrischen Kristall aufweist.

**Claims**

1. A gas laser device capable of emitting pulses of a radiation (22) at a single frequency, comprising:
— a gas laser generator (1—5) including:
· two reflectors (4, 5) disposed to form a resonant optical cavity along a first axis (2), one of these reflectors (4) being partially transparent,
· means (1) for disposing an active laser gas in the cavity,
· means for triggering (17, 3) an electric discharge in the gas, these means being capable of creating a radiation at multiple frequencies oscillating in the cavity, the latter comprising means (5) for linearly polarizing this radiation in a first plane,
· and means (6) for displacing one of the two reflectors along the first axis so as to modify the frequencies of oscillation of the radiation in predetermined bands by varying the length of the cavity,
— a laser emitter (10) suitable for delivering a continuous radiation at a stabilized frequency, said frequency lying in said predetermined bands,
— a polarizer (11) disposed at the output of the laser emitter to linearly polarize the continuous radiation in a second plane,
— means (9, 5) for injecting the polarized continuous radiation into the cavity, said means receiving this radiation along a second axis (8) - and emitting the radiation parallelly to the first axis towards the partially transparent reflector in such a manner that the second plane is perpendicular to the first plane, a portion of this polarized radiation leaving the cavity,
— a photoelectric receiver (13) disposed to receive at least a portion of said polarized continuous radiation leaving the cavity,
— and a detector (16) connected to the electrical output of the receiver and to said triggering means, said circuit being capable of delivering a signal to the input of the triggering means whenever the laser energy received by the receiver passes through an extreme value, one of the radiation frequencies capable of oscillating in the cavity then being equal to the stabilized frequency of the injected continuous polarized radiation, said signal controlling the triggering of the electrical discharge, a portion of the energy of the radiation oscillating in the cavity passing through the partially transparent reflector to create a pulse of laser radiation whose single frequency is equal to that of the continuous radiation delivered by the emitter,
characterized in that
— said portion of the polarized continuous radiation received by the receiver (13) leaves the cavity (4—5) along the second axis (8) after being reflected in the opposite direction by the partially transparent reflector (4),
— and that it includes an optical plate (21) disposed between the emitter (10) and the polarizer (11) and oriented in such a manner as to direct towards the receiver (13) the radiation leaving the cavity (4—5) along the second axis (8) after having passed through the polarizer (11) in the opposite direction to the radiation (19) emitted by the emitter (10), said extreme value of laser energy received by the receiver (13) for which the detection circuit (16) delivers a detection signal being a minimum value.

2. A device according to claim 1, characterized in that the other reflector of the cavity is constituted by a grating (5) which is inclined to the first axis (2), said means for linearly polarizing the radiation oscillating in the cavity in a first plane being constituted by the parallel lines of the grating (5) and said second axis (8) being the zero order axis of the grating (5).

3. A device according to claim 2, characterized in that said means for displacing one of the two reflectors along the first axis are constituted by an electromechanical transducer (6) comprising a piezoelectric crystal fixed to the body of the grating (5).

# FIG. 1

0 123 198

# FIG. 2

EMETTEUR LASER — 10, 19, 21, 11, POLARISEUR, 23, 9, 8, 5, TRANSDUCTEUR, 6, 1 TUBE LASER, 3, ENSEMBLE ANODE-CATHODE, 2, 4, 22, 13 RECEPTEUR, 7 CIRCUIT D'ALIMENTATION ELECTRIQUE, CIRCUIT DE DETECTION 16, 17, CIRCUIT DE COMMANDE

0 123 198